# EUROPEAN PATENT APPLICATION

(11) **EP 4 817 764 A1**
(43) Date of publication of application: **07.10.2026**
(21) Application number: 25218341.3
(22) Date of filing: 25.11.2025
(51) Int. Cl.: B22F 10/25, B22F 10/368, B22F 10/50, B22F 12/20, B22F 12/90, B23K 9/04, B23K 26/342, B33Y 10/00, B33Y 30/00, B33Y 50/02, B22F 12/10, B23K 26/03

(54) **METHOD AND APPARATUS FOR PRODUCING A METAL OBJECT**

(30) Priority: 06.12.2024 IT 202400027831; 02.01.2025 IT 202500000009
(71) Applicant: Paronetto, Giuseppe, 31050 Vedelago (TV) (IT)
(72) Inventor: Paronetto, Giuseppe, 31050 Vedelago (TV) (IT)
(74) Representative: Citron, Massimiliano

(57) **Abstract**

A method is described for producing a metal object by 3D printing with the steps of
- progressively building the object by material deposition by depositing superimposed layers of metal,
wherein a quantity of metal, e.g. molten, is deposited on a previously printed portion of the object, and
- while a new layer is being deposited, forcibly regulating a flow of heat coming from the object.

## Description

The invention relates to a method and apparatus for producing a metal object, in particular a mold shell.

It's common to produce carbon molds in an autoclave for hot-molding carbon objects. These molds, taken here as an example, are used because they're not very expensive, but they have a short lifespan (the resin wears out) and must be continually replaced in mass production.

Another technology uses metal molds, which can also exploit induction heating. A mold used for the molding process of carbon undergoes intense thermal cycles and must have a nearly perfect structure. Metal molds, on the other hand, are produced by removing material from metal blocks, which are then welded together. This results in fracture zones having different characteristics from the rest of the block.

To avoid this problem, a recent approach is to 3D-print the mold by depositing metal through material build-up (additive technique). Some practicable technologies are, for example, WAAM (*wire arc additive manufacturing*) and DED (*direct energy deposition*)*.*

All 3D-printing systems have a problem: whether plasma-based, laser-based, or otherwise, they aggregate powder or wire, or deposit drops of molten metal, and the metal agglomerates expand or contract with temperature. If the printed part is small, this doesn't have much influence, but if the printed part is large (e.g. a hood or an airplane wing), a small deviation at the base of the growing piece can lead to significant deformations as it is being developed. In other words, deposition growth undergoes a progressive and continuous deformation that prevents the creation of large molds or objects.

Another problem with WAAM processes (*Wire Arc Additive Manufacturing*) and *Directed Energy Deposition (DED*)*,* taken as examples here, are rapid thermal gradients: the deposition of material creates significant temperature differences between the newly solidified areas and the cooler ones. This results in residual stresses in the material, which build up due to cyclical thermal expansion and contractions, and a complex geometry of the piece can amplify the distortion problems.

The main object of the invention is to improve this state of the art.

Another object is to produce a metal object that is more resistant and durable under intense and repeated thermal cycles.

At least one object is achieved by what is defined in the attached claims, where the dependent claims define advantageous variants of the invention.

One aspect of the invention relates to a method for producing a metallic object by 3D printing with the steps of
- progressively building the object through material built-up by depositing superimposed layers of metal,
   wherein a quantity of metal, e.g. molten metal, is deposited on a previously printed portion of the object and such quantity is fused with the previously deposited metal by supplying heat, and
- forcibly regulating a flow of heat dissipated by the newly deposited metal and/or a zone of previously deposited metal to regulate the temperature of the newly deposited metal and/or said zone during the cooling of the newly deposited metal and/or said zone,
in order to determine a time trend for the temperature during the cooling of the newly deposited metal and/or in said zone.

In one embodiment, said zone is a zone adjacent to the newly deposited metal, but not necessarily.

The abovementioned feature of regulating the cooling dynamics of the metal has the significant advantage of stabilizing the mechanical and chemical properties of the deposited metal, preventing internal distortions due to high thermal gradients. This results in improved quality of the final printed piece. The control of the cooling gradient eliminates, or at least mitigates, also the problem of deformations caused by the heat diffused during the deposition. The incandescent melting zone where the metal is deposited spreads heat to the already formed underlying part of the object, which is still hot from the previous deposit. The melting zone continues to heat the underlying and adjacent layers, becoming a continuous source of thermal stresses that prevent the structural stabilization of the newly deposited layers. The heat continues to propagate through the newly deposited layers and prevents the desired geometry from stabilizing.

Another advantage of the method is that it keeps the temperature of the material within a controlled range, to minimize thermal contraction.

In one embodiment, the method comprises the step of
regulating the temperature, in particular the cooling rate or gradient or the temperature time trend, of the newly deposited metal and/or of said zone
by regulating a flow of heat exiting the newly deposited metal and/or said zone, specifically so that the temperature follows a predetermined trend during cooling. For example, the predetermined trend may be a temperature curve or graph, or a tolerance band of minimum and maximum values within which the temperature must dynamically remain over time.

The control of the outgoing heat flow occurs during and/or after the deposition of a new layer of metal on the object, and can be achieved with the step of
extracting heat forcibly from the newly deposited metal and/or from said zone and/or
applying forcibly heat to the newly deposited metal and/or to said zone.

If the cooling trend is too slow compared to a reference trend, heat is extracted to accelerate heat dissipation and the cooling of the metal; if the cooling trend is too fast, heat is added to reduce heat dissipation and slow the cooling of the metal.

In the method, the zone of the piece being built in which heat transfer is controlled can vary.

In one embodiment, the metal is deposited in a deposition zone and heat is added to and/or forcibly extracted from a thermal regulation zone. The thermal regulation zone is preferably
a zone adjacent to the deposition zone, which is the hottest, and/or
a portion of object printed in the previous metal deposition pass.

The ways in which heat is extracted or supplied in the method, and the corresponding means for transferring heat, with which a machine implementing it (see below) is equipped, can vary.

In one embodiment the step of extracting and/or supplying heat comprises the step of applying a body on the object being built, in particular on the thermal regulation zone, so that there is heat transfer from the object or metal to the extracting body, or vice versa.

Said body may perform both the functions of supplying or removing heat, as a function of its temperature relative to the zone of the object with which it comes into contact. Therefore we will generally refer to said body as *heat-transferring body.*

In one embodiment the step of extracting heat comprises the step of applying the heat-transferring body on the object being built, in particular on the thermal regulation zone, so that there is heat transfer from the object or metal to the extracting body.

In one embodiment the step of transferring heat comprises the step of applying the heat-transferring body on the object being built, in particular on the thermal regulation zone, so that there is heat transfer from the heat-transferring body to the object or metal.

In one embodiment, the step of extracting heat comprises the step of striking the thermal regulation zone with a flow of cooling fluid.

In one embodiment, the step of applying heat comprises the step of striking the thermal regulation zone with a flow of heating fluid.

In one embodiment the step of extracting heat comprises the step of cooling the heat-transferring body to dissipate the heat absorbed from the object. In particular, in the heat-transferring body a fluid is circulated, e.g. a refrigerant fluid, e.g. a liquid, to cool the heat-transferring body. Preferably, the fluid is at such a temperature so as to allow the extraction of the excess heat but also to provide a cooling gradient that eliminates internal stresses that could arise if cooling is too fast or too slow.

More preferably, to increase the flow of heat extracted from the object, the step of extracting heat comprises the steps of
providing a first body and a second body made as said heat-transferring body, and
applying the first body on one side of the object being built and the second body on an opposite side of the object being built.

The heat-transferring body may be integrated into the 3D printing machine in various ways.

In one embodiment, the step of applying is performed using a robotic arm, manually or with an N-axis CNC machine. A variant envisages attaching the heat-transferring body, manually or not, to the object with a magnet.

In one embodiment the step of building the object progressively in layers occurs by moving on a portion of the object printed in the previous pass a deposition means which deposits a quantity, e.g. a drop, of molten metal on said portion.

In one embodiment the deposition means is moved by a robot.

In one embodiment the heat-transferring body is mounted on the deposition means, with the advantage that the heat-transferring body can immediately touch the hottest surface of the object.

The heat-transferring body may be inflatable, e.g. a balloon, and is preferably inflated each time the deposition means is repositioned on/relative to the object for a new pass.

In one embodiment the step of regulating comprises the step of bringing the heat-transferring body closer to the portion of the object printed in the previous pass and then inflate it, or vice versa, so as to make an external surface of the heat-transferring body adhere to the portion of the object printed in the previous pass.

In one embodiment the means for transferring heat or the heat-transferring body are mounted on a robotic arm and are moved relative to the object being built to carry the means for transferring heat or the heat-transferring body in contact with a zone of the object, in particular in contact with a zone adjacent to the zone where the metal is currently being deposited. In particular, the robotic arm comprises means for depositing the metal and is moved simultaneously with the means for transferring heat or the heat-transferring body.

In one embodiment, the heat-transferring body is mounted on a second robot that cooperates with a first robot equipped with the deposition means.

In the method, the heat-transferring body may be moved in various ways.

In one embodiment the step of supplying comprises the step of tracking with the heat-transferring body a zone adjacent to the deposition zone, or the deposition zone itself, to maintain contact between the heat-transferring body and the deposition zone which moves over time as the object grows.

In the method, the heat-transferring body may cooperate with the metal deposition means according to various strategies.

The aforementioned body can also or only perform the opposite step of supplying heat, when the temperature of the body is higher than that of the metal.

In one embodiment, the step of supplying heat occurs by striking the newly deposited metal and/or said adjacent zone and/or said heat regulation zone with a laser beam.

In one embodiment the method comprises the steps of
detecting the temperature at multiple points on the object, e.g. via temperature sensors or cameras,
processing the temperature data detected by the sensor to determine in real time the temperature of the object at those points (e.g. by comparing the detected temperature with a fixed threshold or by comparing the temperature detected at multiple points on the object to determine the hottest point(s);
removing and/or applying heat to at least one of such points, e.g. by moving the heat-transferring body so that the heat-transferring body touches a detected hot spot or the hottest detected spot or one of the hottest detected spots, or e.g. by striking at least one of the spots with a laser,
so as to regulate the temperature of the metal at at least one of such points according to a desired time trend.

In one embodiment the method comprises the steps of
detecting the temperature at multiple points on the object, e.g. via temperature sensors or cameras,
processing the temperature data detected by the sensor to determine in real time a hot or hottest point on the object (e.g. by comparing the detected temperature to a fixed threshold or by comparing the temperature detected at multiple points on the object to determine the hottest point(s);
removing heat from at least one of such detected hot or hottest points, e.g. by moving the heat-transferring body so that the heat-transferring body touches a detected hot point or the hottest detected point or one of the detected hottest point s.

In one embodiment the method comprises the steps of
- detecting the temperature and/or appearance of the object during the 3D printing;
- determine a hotter point in the object being built;
- moving the heat-transferring body to obtain the contact between the heat-transferring body and said point.

Another aspect of the invention relates to a machine, capable of performing the above method,
to produce a metal object via 3D printing, comprising:
- a deposition means for building up the object progressively layer by layer by depositing superimposed layers of metal,
- means for forcibly extracting and/or supplying heat to/from the object while a new layer of metal is being deposited.

In one embodiment the means for extracting and/or supplying heat are adapted to extract heat from and/or supply heat to
a zone adjacent to the deposition zone, which is the hottest, and/or
a portion of object printed in the previous pass, wherein
the deposition zone is the zone where the metal is deposited.

In one embodiment the means for extracting and/or supplying heat comprise the aforementioned heat-transferring body, in one or each of its variants.

In particular, the means for extracting and/or supplying heat comprise a heat-extracting body which is movable to be positioned on the object being built, in particular on the extraction zone, so that there is heat transfer from the object to the body.

In particular, the means for extracting and/or supplying comprise a dispenser for emitting a flow of cooling and/or heating fluid directed towards the extraction zone.

In one embodiment the means for extracting and/or supplying comprise means for cooling and/or heating the means for extracting and/or supplying, and preferably also for dissipating the heat absorbed from the object. Specifically, the means for extracting and/or supplying comprise a fluid circuit, e.g. a cooling and/or heating fluid, e.g. a liquid, for cooling or heating the means for removing.

More preferably the means for extracting and/or supplying comprise
a first body and a second body made as said heat-transferring body or heat-extracting body, and
means for simultaneously applying the first body on one side of the object being built and the second body on an opposite side of the object being built.

In one embodiment the machine comprises a robotic arm to support and move the means for extracting and/or supplying heat.

In one embodiment the means for extracting and/or supplying are mounted on, and/or integral with, the deposition means. Specifically, the machine comprises a robotic arm to simultaneously support and move the means for extracting and/or supplying and the deposition means.

In one embodiment, the means for extracting and/or supplying are mounted on a second robot that cooperates with a first robot equipped with the deposition means.

In one embodiment, the means for extracting and/or supplying comprise a laser beam source for striking the, and therein raising the temperature of, the newly deposited metal and/or a zone adjacent to the newly deposited metal and/or the thermal regulation zone.

Preferably the machine comprises:
a temperature sensor or a camera,
an electronic logic unit configured for
   real-time detecting the temperature of multiple points of the object by reading data emitted by the sensor, and
   processing the temperature data detected by the sensor and determine in real time the temperature at the points on the object (e.g. by comparing the detected temperature with a fixed threshold or by comparing the temperature detected at multiple points on the object to determine the hottest point or points), and
   operating the means for removing and/or supplying so that they remove and/or supply heat from/to one of the points so that the local temperature of that point follows a pre-established time trend.

In one embodiment the machine comprises:
a temperature sensor or a camera,
an electronic logic unit configured for
   detecting the temperature at multiple points on the object by reading data emitted by the sensor, and
   processing the temperature data detected by the sensor and determine in real time a hot or hottest point on the object (e.g. by comparing the detected temperature with a fixed threshold or by comparing the temperature detected at multiple points on the object to determine the hottest point(s), and
   moving the means for extracting and/or supplying so that they touch, or remove heat from, a detected hot spot or the hottest detected spot or one of the hottest detected spots.

In one embodiment the machine comprises an electronic logic unit to control and coordinate its own components, in particular the means for extracting and/or supplying heat and the deposition means.

In one embodiment all or some steps of the method are performed by software running in the electronic logic unit.

In one embodiment the means for extracting and/or supplying or the heat-extracting body are flexible to adapt to the object in order to improve heat exchange.

In one embodiment the means for extracting and/or supplying or the heat-extracting body are inflatable, most preferably a balloon. The advantage is that said means or the heat-extracting body are able to contact the object by adapting to any shape of the object and to the shape of the object itself which changes during growth, thus obtaining a greater heat exchange surface.

In one embodiment the means for extracting and/or supplying, or the heat-extracting body, are made of silicone, a material that is very resistant to high temperatures.

Preferably the object is a mold shell for molding a carbon composite object.

In one embodiment the step of building the object progressively in layers takes place using WAAM, or DED, or laser or plasma deposition technology.

When the object is a mold shell, it has a rough and uneven outer surface, too rough to form a high-quality mold cavity. The printed object is then machined on a CNC machine to achieve high precision. More preferably, the printed object is milled to achieve a smooth mold cavity.

In one embodiment, the deposition occurs in a vacuum or reduced atmospheric pressure environment.

The molten metal that cools immediately after deposition incorporates gases. In particular, the surface of the newly deposited layer fills with oxide because it is still hot and in contact with air. Performing the deposition in a vacuum environment or at reduced atmospheric pressure not only eliminates or at least limits the number of inclusions/blowholes in the metal, but also, above all, mitigates the oxidation of the deposited layers.

In one embodiment the deposition is performed in a hermetically sealed environment, and/or ambient air is extracted from the hermetically sealed environment.

In one embodiment by the method two modular mold shells are produced to obtain a complete mold cavity.

Once the two shells are obtained, the following steps are performed to mold an object:
- enclosing within the cavity formed by the juxtaposition of the two shells a solid core completely wrapped in an external layer, e.g. in a limp carbon lamination;
- placing the two shells thus filled and attached to each other inside a closed chamber of a press,
- pressing the shells against each other,
- heating the core and the outer layer, e.g. to 130-140 degrees, to expand the core towards the cavity and solidify (*curing*) the outer layer and fix it to the core,
- separating the shells, and extracting the molded composite object.

*Composite object* is defined here as an object consisting of a solid internal core and an external layer that covers the entire core. In one embodiment the outer layer is carbon or a carbon lamination, e.g. resin impregnated or pre-preg.

Specifically, said core is a solid object obtained by hot molding of - and consisting only of - material in powder form or in the form of microspheres or particles. Specifically, the powdered material comprises - or is composed of - expanded and non-expanded particles, the particles being plastic, closed, hollow, and filled with gas.

Gas-filled plastic microspheres may be used as particles for molding the core. Specifically, the powdered material to be molded is preferably composed of 10-70% expanded microspheres and 90-30% unexpanded microspheres by weight. The microspheres are made of plastic, closed, hollow, and filled with gas. These values ensure favorable performance and weight, suitable for the application, particularly good impact absorption and lightness.

The expanded microspheres are essential to the invention, and act as a binder or filler for the other unexpanded particles. In fact, the expanded microspheres are the filler element that acts as a binder to prevent the other, heavier, expandable microspheres (not yet expanded) from sinking to the bottom of the mold due to gravity and densifying. Instead, the expanded microspheres keep the expanding microspheres uniformly suspended throughout the material. This is why the presence of expanded and unexpanded microspheres ensures uniform density throughout the core, ensuring uniform mechanical performance.

The microspheres are generally spherical in shape and very small (10 to 40 µm in diameter). However, size is not essential.

Further advantages will become clear from the following description, which refers to an example of a preferred embodiment of a method and machine, where:

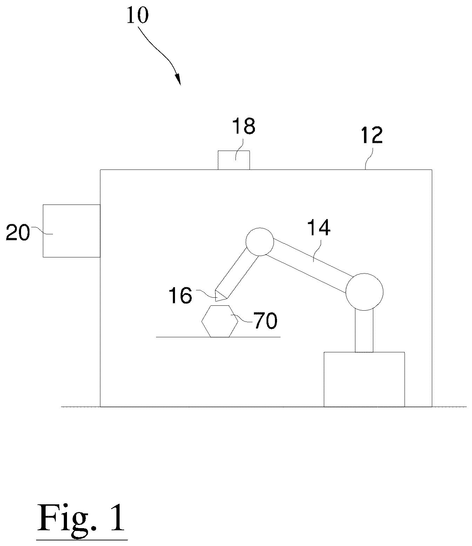

- fig. 1 shows a 3D printing machine;
- fig. 2 and 3 show details of the machine.

A machine 10 for producing a metal object 70, e.g. a mold shell, comprises:
- an (optional) chamber 12, preferably hermetically sealable;
- a robotic arm 14 , e.g. installed inside chamber 12;
- a deposition means 16 mounted on the robotic arm 14.

The deposition means 16 preferably works by WAMM (*wire arc additive manufacturing*) or DED (*direct energy deposition*), but any metal 3D printing technology can be used.

Preferably, the machine 10 comprises means 18 for creating a vacuum, or at least an atmospheric depression, e.g. of at least 0.3-0.99 bar, inside the chamber 12, e.g. a vacuum pump. In particular, the means 18 are controlled by the electronic controller 20 and activated to create a vacuum inside the chamber 12 during deposition, in order to reduce the oxygen in the chamber 12 and therefore the oxide that forms on the deposited metal. The oxide permeates the deposited metal and creates formations in its structure.

To produce the metal object 70, the object 70 is 3D printed with the machine 10. The object 70 is created by progressively depositing metal layers one on top of the other thanks to successive passes of the deposition means 16.

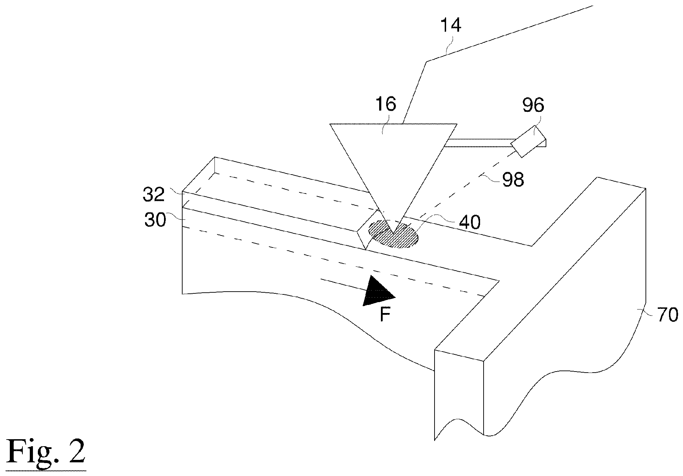

Fig. 2 shows the machine 10 in a phase of metal deposition.

The deposition means 16 moves along a predefined path F to progressively build up the object 70 by superimposing successive layers. In Figure 2, the layer deposited during the previous (lower) pass is indicated by 30, and the layer, still incomplete, which is currently being deposited on the layer 30 is indicated by 32.

The metal deposited by the deposition means 16 involves a deposition zone 40, indicated schematically by a dashed circle above the layer 32.

Due to the very operation of the deposition means 16, the deposition zone 40 is a melting zone for the metal at very high temperatures. From the deposition zone 40 heat propagates into the interior of the object 70 and interferes with its cooling, creating structural defects.

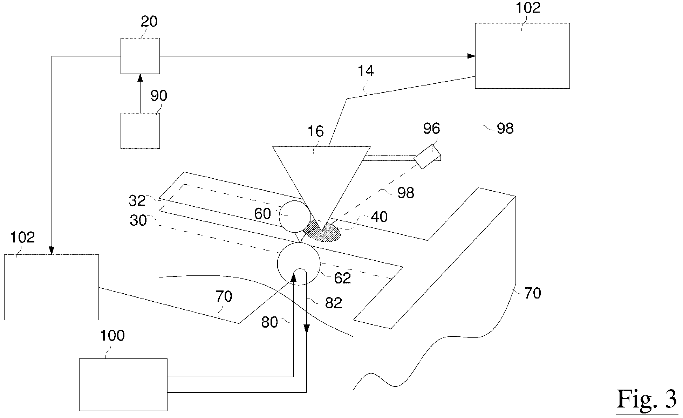

To avoid or mitigate this problem, see Fig. 3, the machine 10 comprises means for forcibly extracting heat from the object 70 and/or means for forcibly supplying heat to the object 70, in particular from/to the deposition zone 40 or from/to an area surrounding the deposition zone 40, while the new layer 32 is being deposited. The purpose is to regulate the time trend of the cooling temperature in the metal of the zone 40 and/or the surrounding area, so as to avoid thermal stress and mechanical deformations. The regulating action may take place, depending on the process circumstances, by cooling or heating the object 70.

Said means, which can be generically referred to as heat-transfer means, may be implemented in various ways.

In one embodiment, the heat-transfer means, see reference 60, are mounted directly on the deposition means 16, so they are very close to the deposition zone 40 for fast capture of the heat produced therein and automatically track the deposition zone 40 during the passage of the deposition means 16.

In one embodiment, the heat-transfer means, see reference 62, are mounted on a second robot 70 that cooperates with the robot 14. The advantage is that the means 62 can be placed on the object 70 with multiple degrees of freedom and on parts otherwise unreachable. For this purpose, the robot 70 is controlled so as to follow the deposition means 16 and the deposition zone 40 during the deposition of the metal.

In one embodiment the heat-transfer means comprise a heat-transferring body that can be positioned on the object 70 being built, in particular on the deposition zone 40, so that heat is transferred between the object and the heat-transferring body. Preferably, the heat-transferring body is able to withdraw heat from the zone 40 because it is - or is maintained - at a lower temperature.

To improve the shape fit between the heat-transfer means and the object 70 preferably the heat-transfer means are flexible and/or inflatable, most preferably a balloon.

The heat-transfer means may be internally cooled to dissipate the heat absorbed from the object 70. E.g. in the heat-transfer means a fluid, e.g. a refrigerant, e.g. a liquid, is circulated to cool it. Fig. 3 shows as an example a cooling circuit for the body 62: a supply line 80 for the refrigerant and a return line 82 for a refrigerant. The lines 80, 82 communicate with a source 100 of fluid, internal or external to the machine 10. The same could be done for the body 60 or only for the body 60. The lines 80, 82 can also be used to heat the body 62.

In one embodiment, the heat-transfer means comprises a laser source 96, preferably mounted on the robotic arm 14 or the deposition means 16. The laser source 96 is capable of emitting a laser beam 98 that strikes the area 40 to locally increase its temperature if the local cooling is too fast.

Preferably, the machine 10 comprises an electronic controller 20 configured to control, and preferably coordinate, the movements of the robotic arm 14, the activity of the deposition means 16, the movements of the robotic arm 16 (when present), and the activity of the heat-transfer means. However, any known management system may be used.

The number and layout of the heat-transfer means may vary from what is illustrated, depending, for example, on the object and the amount of heat to be transferred. If there is more than one heat-transfer means in the machine 10, each heat-transfer means cooperates synergistically with the others to simultaneously transfer heat to/from multiple points of the object 70.

For this purpose, the controller 20 preferably controls and coordinates the movements of the heat-transfer means around the object 70.

However it is supported and moved, each heat-transfer means can operate with various strategies.

For example, the heat-transfer means may be brought close to the deposition zone 40 and then inflated, or vice versa. The heat-transfer means may remain permanently attached to the object 70 or temporarily detach itself to reach better heat exchange points.

For example in the machine 10 said heat-transfer means comprises a first body and a second body each made as said heat-transfer means, and the first body is dynamically applied on one side of the object 70 being built and the second body on an opposite side of the object 70 being built.

The cooling efficiency of the heat-transfer means can be improved by detecting the hot, or hottest, points of the object 70 in real time and placing the heat-transfer means at such points to regulate the temperature of such points over time. Preferably for this purpose the machine 10 comprises a temperature sensor 90, e.g. a camera or an IR sensor, to detect the temperature of multiple points of the object 70. The temperature data detected by the sensor 90 are processed by the controller 20 to determine in real time a hot, or hottest, point of the object 70, or in general the temperature of the areas to be cooled in a controlled manner. The controller 20 then operates to actuate the heat-transfer means in order to regulate the time trend of the temperature during the cooling step at at least one detected point. For example, the controller 20 operates to bring the heat-transfer means into contact with one or more detected points, e.g. by correspondingly moving the arms 14, 70 by driving drives 102.

## Claims

1. Method for producing a metal object by 3D printing with the steps of
- progressively building the object by material deposition by depositing superimposed layers of metal,
wherein a quantity of metal, e.g. molten, is deposited on a previously printed portion of the object, and
- while a new layer is being deposited, forcibly regulating a flow of heat dissipated by newly deposited metal and/or by a zone of previously deposited metal so as to determine a time trend for the temperature during the cooling of the newly deposited metal and/or in said zone.

2. Method according to claim 1, wherein the regulating step comprises the step of removing heat from the newly deposited metal and/or from said zone to increase the cooling rate.

3. Method according to claim 1 or 2, wherein the regulating step comprises the step of applying heat to the newly deposited metal and/or to said zone to slow the cooling rate.

4. Method according to claim 1 or 2 or 3, wherein the step of regulating comprises the step of applying a body on the newly deposited metal and/or said zone so that there is heat transfer between the body and the newly deposited metal and/or said area, in order for the temperature of the newly deposited metal and/or said zone to drop at a predetermined rate.

5. Method according to claim 4, wherein the step of applying comprises the step of cooling the body to dispose of heat absorbed from the object.

6. Method according to claim 5, wherein a fluid is circulated through the body to cool or heat the body.

7. Method according to any preceding claim, wherein the step of regulating comprises striking the newly deposited metal and/or said zone with a laser beam to increase the temperature thereof.

8. Method according to claim 4 or 5 or 6 or 7, wherein the body is mounted on a robotic arm and is moved relative to the object being built to bring the body into contact with a zone of the object, in particular into contact with a zone adjacent to the zone where the metal is currently being deposited.

9. Method according to claim 8, wherein the robotic arm comprises means for depositing the metal and is moved simultaneously with the body.

10. Method according to any preceding claim 4 to 9, wherein the body is inflatable and is inflated to bring it into contact with a zone of the object, in particular into contact with a zone adjacent to the zone where the metal is currently being deposited.
